# EUROPEAN PATENT APPLICATION

(11) **EP 2 315 393 A2**
(43) Date of publication of application: **27.04.2011**
(21) Application number: 10008391.4
(22) Date of filing: 11.08.2010
(51) Int. Cl.: H04L 12/26

(54) **Acces log management method**

(30) Priority: 20.10.2009 JP 2009240983
(71) Applicant: Hitachi, Ltd., Chiyoda-ku Tokyo 100-8280 (JP)
(72) Inventor: Nemoto, Naokazu, Tokyo 100-8220 (JP); Nakahara, Masahiko, Tokyo 100-8220 (JP)
(74) Representative: Strehl Schübel-Hopf & Partner

(57) **Abstract**

In a gateway device (100) holding a traffic relay function (150), the storage cost and the retrieval time for a great amount of access logs are prevented from increasing. The gateway device (100) includes a traffic relay function (150), a protocol analysis function (151), a log output function (152) and a log retrieval function (153). These functions output an access log in compressed or uncompressed form in compliance with a rule for each protocol designated by the manager in accordance with the degree of importance. The retrieval is carried out for the uncompressed file.

## Description

### BACKGROUND

This invention relates to the log management function of a server device such as the WWW (World Wide Web) or a gateway device installed on the communication path between the server device and a terminal in a network system for data communication between the server device and the terminal.

With the extension of the use of terminals coupled to a wired network or a wireless network, the amount of the data exchanged between the server device such as WWW and client terminals is ever on the increase. Also, the traffic has been increased by the shortening of the data communication time resulting from the increased capacity of the communication band of the wired network or the wireless network.

The gateway device is often installed in a service provider such as an ISP (internet service provider) or a communication carrier. The increased traffic also increases the amount of data communication through the gateway device. At the same time, the logs handled by the gateway device (access logs) increase, resulting in an increased cost of maintenance and management.

According to "Information Analysis Time Reduced from Several Days to Several Minutes by Netezza Realizing Immediate, Sophisticated Analysis" [online], Business Communication, 2008, Vol. 45, No. 11, Retrieved August 4, 2009 on Internet <URL: http://www.netezza.jp/documents/NTT_docomo_BCM_Nov_2008_Netezza.pdf>, the data size of the access logs managed by the communication carrier has reached several to several tens of TB.

The service provider, in order to meet the inquiry from the user (terminal user), is required to hold the access log for a predetermined length of time. Thus, the problem of a high management cost is posed to hold and retrieve the access log. The access log can be analyzed and retrieved at high speed by being stored in a data base. This method, however, requires disk space for index data and harbors the problem of a higher operation cost of the data base management software.

A technique to solve these problems is disclosed in Japanese Published Patent Application JP-A-2003-76814.

### SUMMARY

The technique disclosed in JP-A-2003-76814 is intended to reduce the amount of the logs held in the server device. According to this technique, those logs acquired by the server device which fail to meet a predetermined condition are not output to the data base. In an application of this technique to the gateway device, the fact that all the logs are not held may fail to meet the inquiry from the user.

In order to solve the problem described above, there is disclosed a system having the traffic relay function, the protocol analysis function, the log output function and the log retrieval function in a server or on a network path between the server and a client.

The system disclosed herein is characterized by a means for dynamically changing the log acquisition mode, wherein the request from the client or the response from the server output as one access log by the functions described above is acquired in compressed or uncompressed form in accordance with the log acquisition mode designated for each protocol by a manager.

Also, the system disclosed herein is characterized by a log output means for each log acquisition mode, wherein the functions described each output the access log thereof to a different file.

According to a more specific aspect, there is provided an access log management method for a gateway device coupled to a client and a server to each other through a network, wherein the request received from the client is transmitted to the server and the response received from the server is transmitted to the client, characterized by comprising the steps of:
classifying the access logs for each protocol used for access from the client to the server;
compressing the access log of the type designated in advance for compression, and recording the compressed access log in a compressed log file; and
recording the access log of the type designated in advance as uncompressed, in an uncompressed log file in an uncompressed form.

Further, the gateway device is **characterized in that** the type designated as compressed form and the type designated as uncompressed form are determined in advance in accordance with the protocol and the log acquisition mode designated for the message type of the protocol, and the log acquisition mode is set in accordance with the setting mode for setting the log acquisition mode for each session.

Also, the gateway device is **characterized in that** the uncompressed log file is retrieved in priority to the compressed log file in response to the retrieval request from the client.

According to the teaching herein, there can be provided a log management system capable of meeting the inquiry from the user without a high operation cost.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 shows an example of the configuration of a computer system.
Fig. 2 shows an example of a log output mode management table held by the gateway device.
Fig. 3 shows an example of an identification table held by the gateway device.
Fig. 4 shows an example of a log output address setting table held by the gateway device.
Fig. 5 shows an example of a log output management table held by the gateway device.
Fig. 6 shows an example of an access log file stored in a disk device by the gateway device.
Fig. 7 shows an example of an access log record stored in a memory by the gateway device.
Fig. 8 shows an example of the flowchart of the process executed by the gateway device to relay the request from the client to the server.
Fig. 9 shows an example of the flowchart of the process executed by the gateway device to relay the traffic of the request from the client.
Fig. 10 shows an example of the flowchart of the process executed by the gateway device to analyze the request received from the client.
Fig. 11 shows an example of the flowchart of the process executed by the gateway device to relay the response from the server to the client.
Fig. 12 shows an example of the flowchart of the process executed by the gateway device to receive the response from the server and store the access log in the memory.
Fig. 13 shows an example of the flowchart of the process executed by the gateway device to output the access log stored in the memory to the disk device.
Fig. 14 shows an example of the flowchart of the process executed by the gateway device to retrieve the access log stored in the disk device.
Fig. 15 shows an example of the configuration of the computer system with a conversion table added in the gateway device.
Fig. 16 shows an example of the conversion table held by the gateway device.
Fig. 17 shows an example of the flowchart of the process executed by the gateway device to receive the response from the server and dynamically change the mode to store the access log.

### DETAILED DESCRIPTION OF THE EMBODIMENTS

Examples are explained below with reference to the accompanying drawings. Incidentally, the invention is not limited by these examples.

The computer system according to this embodiment is configured of a gateway device, a client and a server coupled to each other through a network.

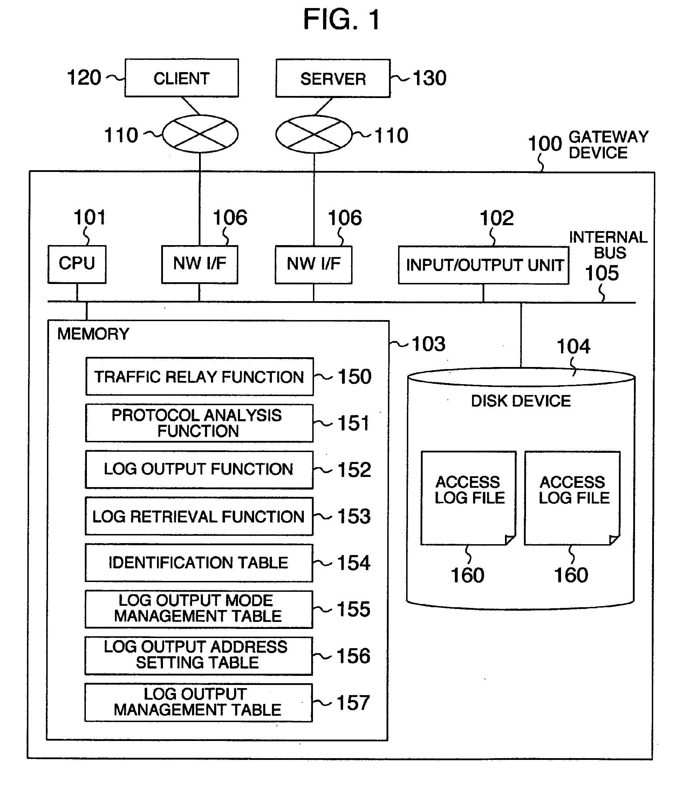

Fig. 1 shows an example of the configuration of the computer system. At least one gateway device 100 includes a traffic relay function 150, a protocol analysis function 151, a log output function 152 and a log retrieval function 153. The gateway device 100 is coupled to at least one client device (hereinafter referred to as a client) 120 and at least one server device (hereinafter referred to as a server) 130 through networks 110.

In the description that follows, one gateway device 100, one client and one server are assumed to be coupled to each other through the networks 110.

The traffic relay function 150 relays the request from the client to the server, and records the data of the logs for the process (access logs) in the memory of the gateway device. At the same time, the traffic gateway function 150, in accordance with the designation by the manager, classifies the access logs into those easy to retrieve later and those difficult to retrieve later.

Then, the access log highly likely to be retrieved is recorded in uncompressed form in an uncompressed log file 160 of the disk device 104 by the log output function 152. Also, the access log less likely to be retrieved is compressed and recorded in a compressed log file 161 of the disk device 104 by the log output function 152.

In the case where the access log is retrieved based on the request of the user or the manager, the uncompressed log file 160 recorded in the disk device 104 is retrieved in priority by the log retrieval function 153 of the gateway device 100. In the case where the uncompressed log file 160 contains no object of retrieval, the log retrieval function 153 searches the compressed log file 161.

The gateway device 100 is realized on a computer in which a CPU 101, a memory 103, at least one network interface (NW I/F) 106, a disk device 104 for storing the access log file 160 and an input/output unit 102 are coupled to each other through a communication path 105 such as internal bus. The NW I/F 106 is coupled to the client 120 and the server 130 through the network 110.

The memory 103 stores therein a program executed by the CPU 101 to realize the traffic relay function 150, the protocol analysis function 151, the log output function 152 and the log retrieval function 153 on the one hand and an identification table 154, a log output mode management table 155, a log output address setting table 156 and a log output management table 157 on the other hand.

The traffic relay function 150 relays the request message or the response message between the client 120 and the server 130. The protocol analysis function 151 analyzes the protocol in the message. According to the log output function 152, the log (access log) to execute the process of relaying the message recorded by the gateway device 100 in the memory 103 is recorded in the uncompressed log file 160 or the compressed log file 161 stored in the disk device 104. According to the log retrieval function 153, the uncompressed log file 160 or the compressed log file 161 stored in the disk device 104 is retrieved at the request of the client 120 or the manager.

The identification table 154 holds the log acquisition mode for each protocol. The log output mode management table 155 holds the log output mode for each session. The log output address setting table 156 holds the memory region information for outputting the log to the memory 103. The log output management table 157 holds the management information for the traffic relay function 150 to output the access log to the memory 103.

Each program for realizing the traffic relay function 150, the protocol analysis function 151, the log output function 152 and the log retrieval function 153 may be stored in the disk device 104 of the computer or, if required, may be introduced into the disk device 104 from other devices through the input/output unit 102, the NW I/F 104 and a medium usable by the computer.

The medium is, for example, a recording medium mountable on and demountable from the input/output unit 102 or the NW I/F 104 or a communication medium (i.e. a wired, wireless or optical network 110 or a carrier or a digital signal propagating through the network 110).

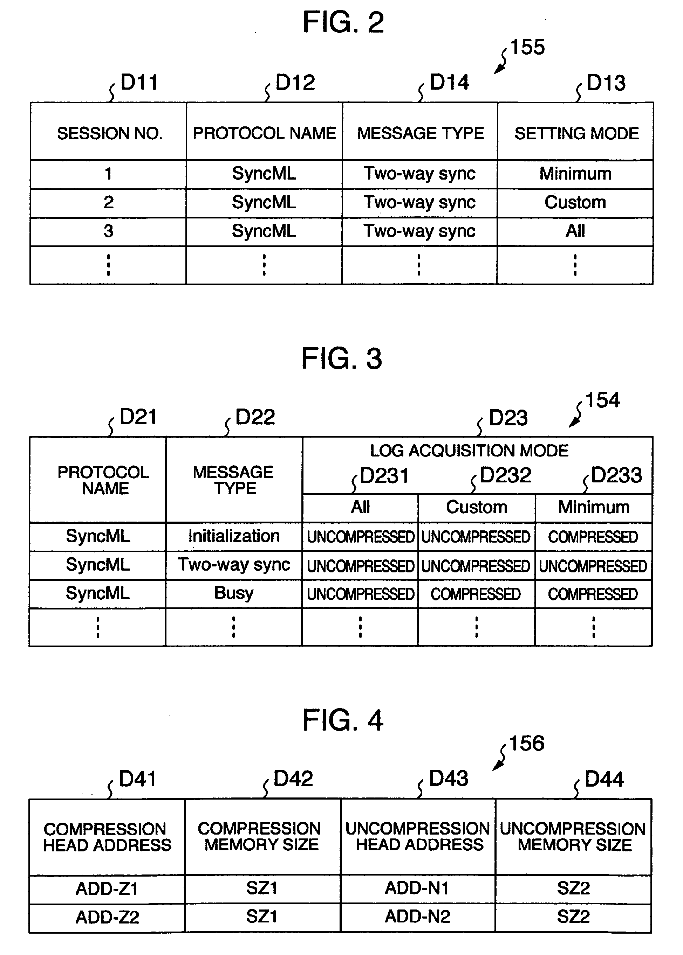

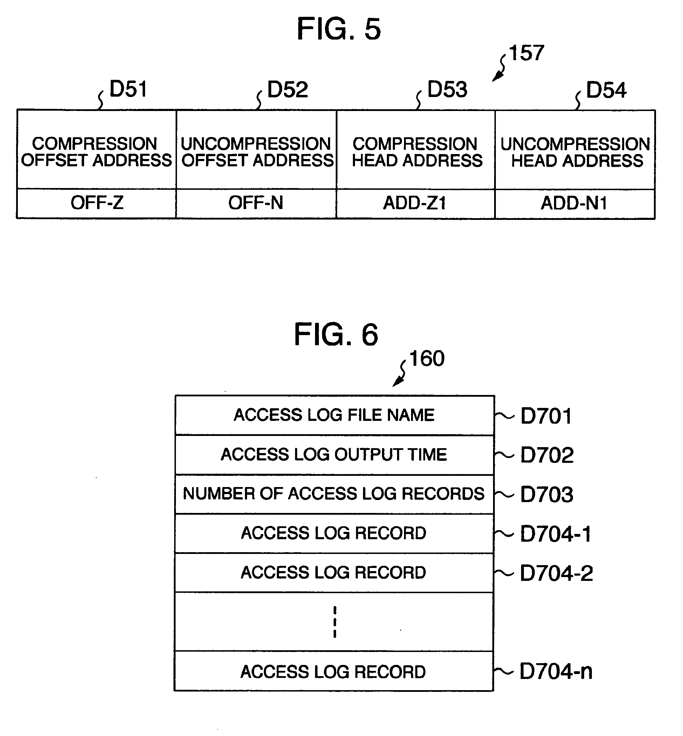

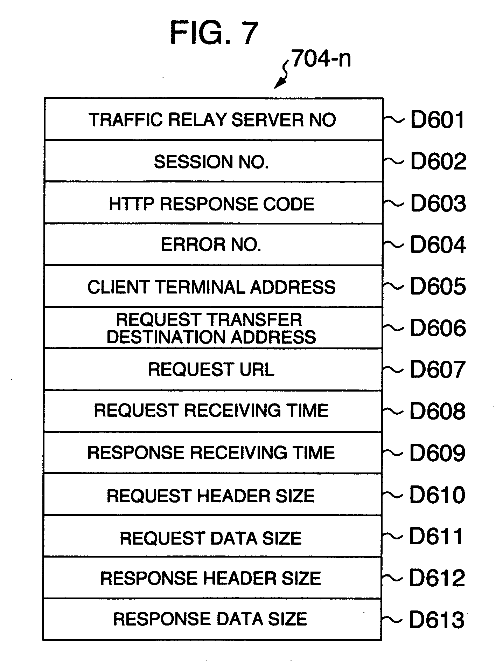

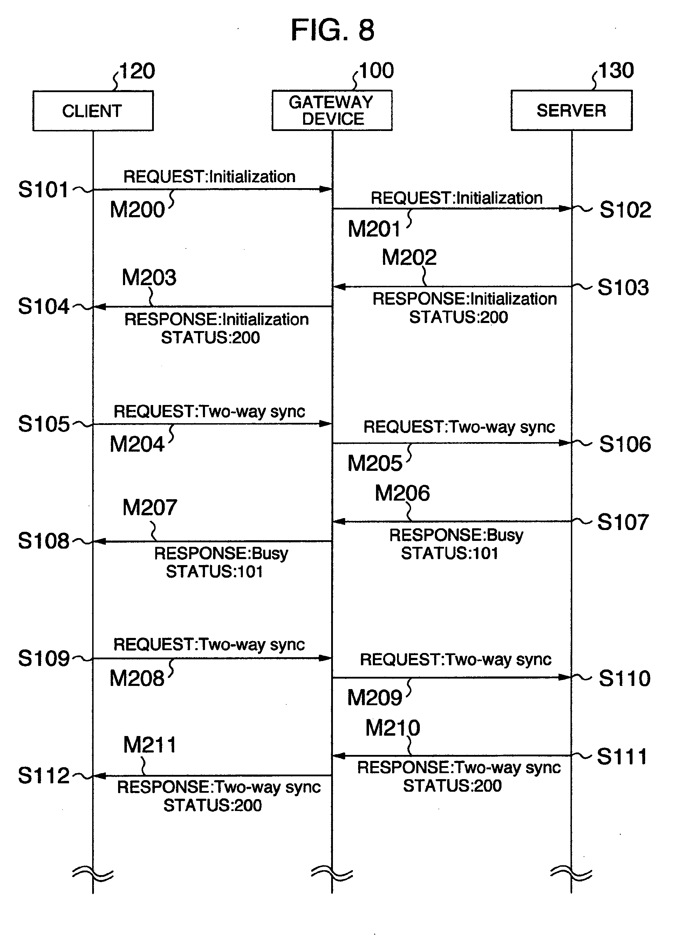

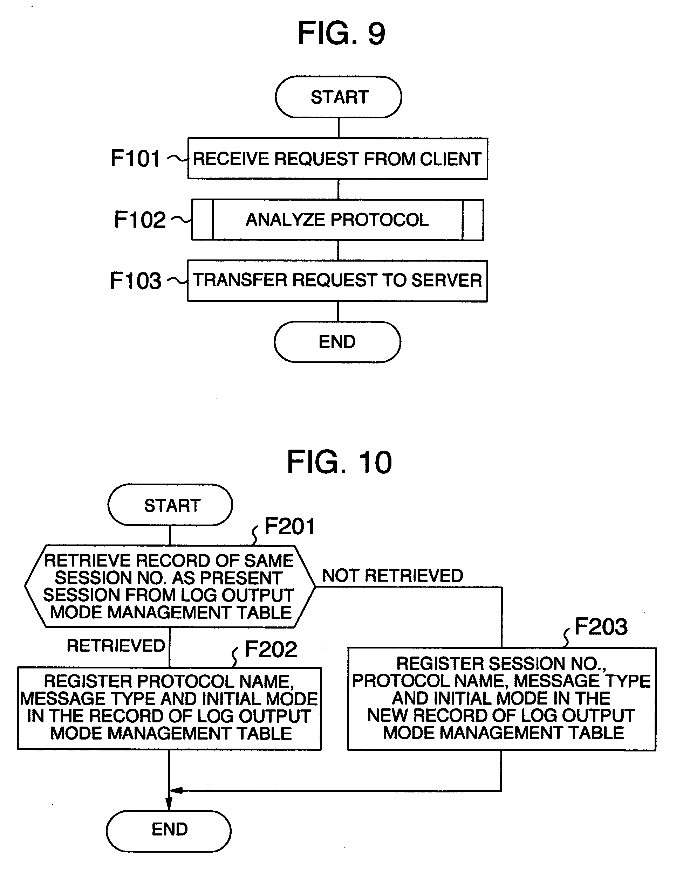

Figs. 2 to 5 show the information contained in the gateway device. Figs. 6 and 7 show an example of the configuration of the access log record and the access log file. Fig. 8 shows an example of the flow of the process executed by the gateway device to relay the request from the client to the server using the SyncML (Synchronization Markup Language) protocol. Figs. 9 to 14 show an example of the flow of the relay process, the access log output process and the retrieval process executed by each function of the gateway device.

Fig. 2 shows an example of the log output mode management table 155 held by the gateway device 100. A session number column D11 stores the acceptance number for the gateway device 100 to accept the request from the client 120 to the server 130. A protocol name column D12 stores the protocol type of the message. A message type column D14 stores the message type of the session. A setting mode column D13 stores the access log acquisition mode designated for the session.

This embodiment defines three modes including an "all" mode for acquiring all the logs in uncompressed form, a "custom" mode for acquiring a part of the logs in compressed from, and a "minimum" mode for acquiring another part of the logs in compressed form in addition to the logs acquired in custom mode.

In "all" mode, all the logs are acquired in uncompressed form. Although the data size of the log is increased, the overhead for retrieving the logs held is decreased.

In "minimum" mode, the log is acquired by compressing many data. Although the log data size is small, the overhead for retrieving the log held is high.

In "custom" mode, the log data size is smaller than in "all" mode and larger than in "minimum" mode. Also, the overhead for retrieving the log held is larger than in "all" mode and smaller than in "minimum" mode.

In "minimum" mode, the log to be retrieved is acquired in uncompressed form and the log not to be retrieved is compressed. In retrieving the log held, for example, the policy is adopted to add the busy message and not to retrieve the log of the initialization message (analysis not required), and the traffic relay function 150 acquires the logs other than these two messages in uncompressed form.

Similarly, in "custom" mode, the log to be retrieved is acquired in uncompressed form and the log not to be retrieved is compressed. However, there are more types of logs (acquired in uncompressed form) to be retrieved than those designated in "minimum" mode. The policy is adopted, for example, not to retrieve the logs of the busy message (analysis not required), and the logs other than the busy message are acquired in uncompressed form by the traffic relay function 150.

The manager designates the log acquisition method of each mode as the log acquisition mode D23 shown in Fig. 3 (identification table) in units of protocol or message.

Fig. 3 shows an example of the identification table 154 held by the gateway device 100. The protocol name column D21 stores the name of the protocol used between the client 120 and the server 130. The message type column D22 stores the message type for the particular protocol. The log acquisition mode column D23 is configured of an "all" column D231, a "custom" column D232 and a "minimum" column D233. The "all" column D231 stores therein the log acquisition method for compressed or uncompressed form while the log acquisition mode is the "all" mode. The "custom" column D232 stores therein the log acquisition method for the compressed or uncompressed form while the log acquisition mode is the "custom" mode. The "minimum" column D233 stores therein the log acquisition method for compressed or uncompressed form while the log acquisition mode is the "minimum" mode.

Fig. 4 shows an example of the log output address setting table 156 held by the gateway device 100. A compression head address column D41 stores therein the candidates of the head address used in the case where the access log to be output in compressed form is stored in the memory 103 of the gateway device 100. A compression memory size column D42 stores therein the memory size to be output in compressed form. An uncompressed head address column D43 stores therein the candidates of the head address in the case where the access log to be output in uncompressed from is stored in the memory 103 of the gateway device 100. An uncompressed memory size column D44 stores therein the memory size to be output in uncompressed form.

Each value in the identification table 154 and the log output address setting table 156 is initialized at the time of activating the traffic relay function 150.

Fig. 5 shows an example of the log output management table 157 held by the gateway device 100. A compression offset address column D51 stores therein the offset address used in the case where the access log to be output in compressed form is stored in the memory 103 of the gateway device 100. An uncompressed offset address column D52 stores therein the offset address used in the case where the access log to be output in uncompressed form is stored in the memory 103 of the gateway device 100. A compressed head address column D53 stores therein the head address used in the case where the access log to be output in compressed form is stored in the memory 103 of the gateway device 100. An uncompressed head address column D54 stores therein the head address used in the case where the access log to be output in uncompressed form is stored in the memory 103 of the gateway device 100.

Fig. 6 shows an example of the data format employed in the case where the access log recorded in the memory 103 is output by the log output function 152 to the disk device 104 as an uncompressed log file 160 or a compressed log file 161.

The uncompressed log file 160 or the compressed log file 161 is configured of an access log file name D701, an access log output time D702, an access log record number D703 and at least one access log record D704-n.

Fig. 7 shows an example of the data format of the access log record D704-n output to the memory 103 by the traffic relay function 150. The access log record D704-n is configured of a traffic relay server number D601 indicating a process identifier for identifying the program to operate the traffic relay function 150 that has output the record, a session number D602 indicating the acceptance number of the request from the client 120 to the server 130, a HTTP response code D603 indicating an error state added to the response message from the server 130, an error number D604 indicating an error code given as a response to the client by the traffic relay function 150, a client terminal address D605 for specifying the transmitter of the request received, a request transfer destination address D606 for specifying the request transfer destination, a request URL D607 indicating the acquirer of the content of the request, a request receiving time D608 indicating the time when the request is received from the client 120, a response receiving time D609 indicating the time when the response message is received from the server 130, a request header size D610 indicating the header size of the request received from the client 120, a request data size D611 indicating the data size of the request received from the client 120, a response header size D612 indicating the size of the header of the response message received from the server 130, and a response data size D613 indicating the size of the response message received from the server 130.

Fig. 8 shows an example of the flow of the process executed by the gateway device 100 to relay the request from the client 120 to the server 130. An explanation is given here about a case using the SyncML protocol.

According to the SyncML protocol, the messages including the initialization request M200 and the synchronization request M204 are transmitted and received in that order to synchronize the data in the communication between the client 120 and the server 130.

The traffic relay function 150 of the gateway device 100, using the information designated in the session number column D11, the protocol name column D12, the message type column 14 and the setting mode column D13 of the log output mode management table 155, accesses the record having the same protocol name column D21 and the same message type column D22 of the identification table 154, and determines the log acquisition method in the log acquisition mode designated in the setting mode column D13 of the log output mode management table 155.

Now, an explanation is given about an example of the process executed by the traffic relay function 150 of the gateway device 100 to relay the initialization request M204 or the synchronization request M204 of the SyncML protocol from the client to the server.

The initialization request M200 for data synchronization is transmitted by the client 120 and received by the gateway device 100 (S101). The traffic relay function 150 of the gateway device 100 transmits the received request M201 to the server 130 (S102).

The server 130, after receiving the initialization request M201 for data synchronization, transmits the initialization response M202 for data synchronization containing the result (status code) of processing the request, and the gateway device 100 received the initialization response M202 (S103).

The traffic relay function 150 of the gateway device 100 transmits the response M203 corresponding to the received response M202 to the client 120 (S104).

The client 120, after receiving the initialization response M203 for data synchronization, transmits the request M204 including the data to be synchronized and the synchronization request, which request M204 is received by the gateway device 100 (S105).

The traffic relay function 150 of the gateway device 100 transmits the request M205 corresponding to the received M204 to the server 130 (S106).

The server 130, after receiving the request M205 including the data to be synchronized and the synchronization request, transmits the response M206 including the synchronization result (status code), which request M205 is received by the gateway device 100 (S107). In this case, the server is in busy state, and therefore, the status code of the response M206 is 101 indicating the busy state.

The traffic relay function 150 of the gateway device 100 transmits the response M207 corresponding to the received response M206 to the client (S108).

The client 120, after receiving the response M207 having the status of 101 indicating the busy state, transmits the request M208 including the data to be synchronized and the synchronization request again, which request M208 is received by the gateway device 100 (S109).

The traffic relay function 150 of the gateway device 100 transmits the request M209 corresponding to the received request M208 to the server 130 (S110).

The server 130, after receiving the request M209 including the data to be synchronized and the synchronization request, transmits the response M210 including the synchronization result (status code), which response M210 is received by the gateway device 100 (S111).

The traffic relay function 150 of the gateway device 100 transmits the response M211 corresponding to the received response M210 to the client 120 (S112).

Fig. 9 is a flowchart showing the processing steps of the traffic relay process executed by the traffic relay function 150 of the gateway device 100.

The traffic relay function 150 of the gateway device 100 receives the request from the client 120 (F101). In the process, the traffic relay function 150 allocates the session number as a request acceptance number. In the case where the session for the previous access to the same server is held, however, a new session number is not allocated. Next, the protocol analysis function 151 of the gateway device 100 analyzes the received request (F102). Then, the traffic relay function 150 transmits the request to the server 130 (F103).

Fig. 10 is a flowchart showing the detailed step (F102 in Fig. 9) for analyzing the request received from the client 120 by the protocol analysis function 151.

The protocol analysis function 151 of the gateway device 100 sets different information in the log output mode management table 155 according to whether the previous session is held or not (including a new session) at the time of receiving the request from the client 120. The flowchart of Fig. 10 shows these steps.

First, the protocol analysis function 151 searches the session number column D11 of the log output mode management table 155 for the session number for the request which may have been received from the client (F201).

In the case where such a session number is found to exist in step F201, the protocol name and the message type obtained by analyzing the received request and the initial setting mode designated by the manager are registered in the record of the log output mode management table 155 by the protocol analysis function 151 (F202).

In the case where such a session number is not found to exist in step F201, on the other hand, the session number, the protocol name and the message type obtained by analyzing the received request and the initial setting mode designated by the manager are registered in the new record of the log output mode management table 155 by the protocol analysis function 151 (F203).

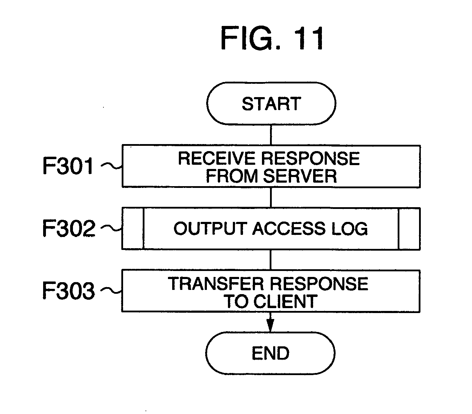

Fig. 11 is a flowchart showing the steps of the traffic relay process in which the traffic relay function 150 of the gateway device 100 receives the response from the server 130 and transmits it to the client 120.

The traffic relay function 150 of the gateway device 100 receives the response from the server 130 (F301).

Next, the traffic relay function 150 outputs to the memory 103 the request received from the client 120 and the access log for the response received from the server 130 (F302).

Then, the traffic relay function 150 transmits the response received from the server 130 to the client 120 (F303).

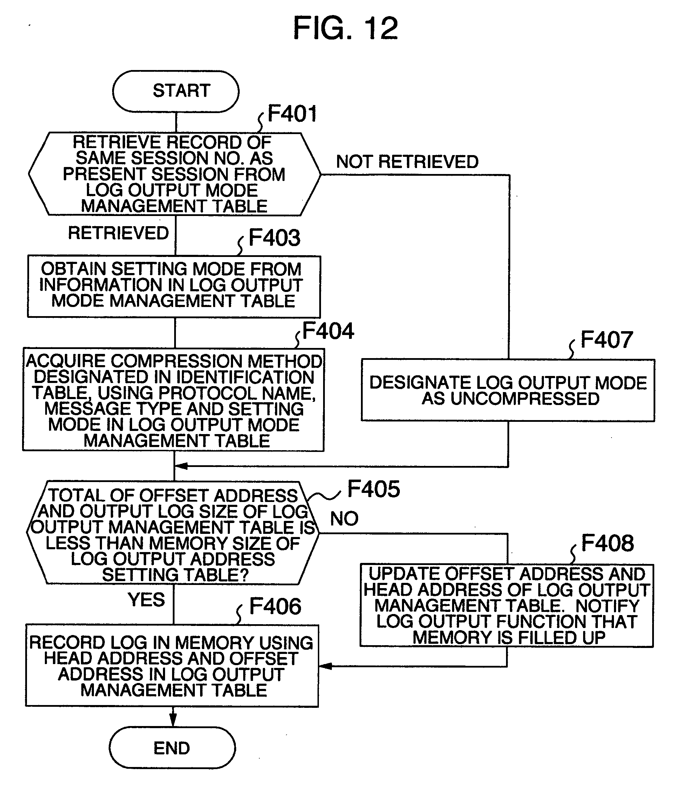

Fig. 12 is a flowchart showing the detailed step (F302 in Fig. 11) for outputting the access log to the memory 103 at the time when the traffic relay function 150 receives the response from the server 130.

The traffic relay function 150 retrieves the record in which the value recorded in the session number column of the log output mode management table 155 coincides with the present session number (F401).

In the case where the retrieval in step F401 is successful, the traffic relay function 150 acquires the setting mode designated in the setting mode column D13 and the protocol name designated in the protocol name column D12 of the same record of the log output mode management table 155 (F403).

Then, the traffic relay function 150, by accessing the identification table 154, obtains the log acquisition mode using the setting mode, the protocol name and the message type (F404).

The traffic relay function 150 acquires the offset address designated in the log output management table 157 and the memory size designated in the log output address setting table 156, calculates the total value of the output access log record size and the offset address, and thus determines whether the total value is less than the memory size or not (F405).

In the case where the total value of the output access log record size and the offset address is less than the memory size, the traffic relay function 150 records the access log in the address value of the memory 103 obtained from the total of the offset address and the head address of the log output management table 157 (F406).

In the case where the record cannot be retrieved in step F401, the traffic relay function 150 designates the log output setting mode as uncompressed and proceeds to step F405 (F407).

In the case where the total value of the access log record size and the offset address is not less than the memory size in step F405, on the other hand, the traffic relay function 150 updates the offset address of the log output management table 157 to 0 and the head address to the other head address designated in the log output address setting table 156.

Then, the traffic relay function 150 notifies the log output function 152 that the log recording memory is filled up (F408). Specifically, the offset address and the head address with the access log recorded therein are notified.

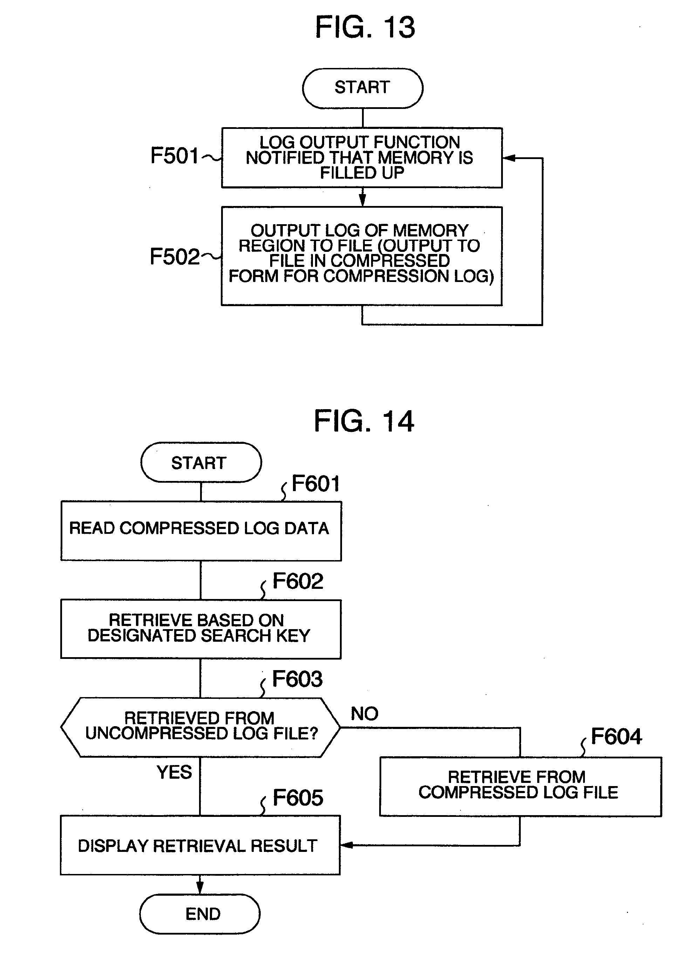

Fig. 13 is a flowchart showing the steps of the process executed by the log output function 152 of the gateway device 100 to output the access log in the log recording region on the memory 103 to the uncompressed log file 160 or the compressed log file 161 of the disk device 104.

The log output function 152 of the gateway device 100 receives the notification from the traffic relay function 150 that the log recording memory is filled up (F501).

Next, the log output function 152, based on the head address and the offset address received, outputs to the disk device 104 the access log recorded in the particular address region (F502). In the case of the log for compression, the log output function 152 outputs the log in compressed form.

According to this embodiment, the log is compressed collectively at the time of outputting to the disk device 104. Nevertheless, the access log may alternatively be compressed at the time of being recorded temporarily in the memory 103 by the traffic relay function 150.

Fig. 14 is a flowchart showing the steps of the process in which the log retrieval function 153 of the gateway device 100 retrieves the uncompressed log file 160 or the compressed log file 161 recorded in the disk device 104.

The log retrieval function 153 reads the uncompressed log file 160 recorded in the disk device 104 (F601).

Next, the log retrieval function 153 retrieves the access log file 160 with the character string designated by the client 120 or the manager as a search key (F602).

As the result of retrieval by the log retrieval function 153 in step F602, it is determined whether the log to be retrieved is found or not in the uncompressed log file 160 (F603).

In the case where the log to be retrieved is so found, the log retrieval function 153 displays the retrieval result on the input/output unit 102 of the gateway device 100 (F605).

In the case where the log to be retrieved is found, on the other hand, the log retrieval function 153 searches the compressed log file 161 (F604).

After that, the retrieval result is displayed on the input/output unit 102 of the gateway device 100 (F605).

In the method according to this embodiment, the log acquisition mode corresponding to the protocol or the message can be designated, and the gateway device 100 can acquire the log to be retrieved in uncompressed form. Therefore, the log retrieval time can be shortened. Also, since the data amount of the data to be retrieved is decreased, the log data size can be decreased.

Also, the access log less liable to be retrieved may be recorded in compressed form to reduce the access log amount.

According to this embodiment, the system is so configured that the disk device 104 is included in the gateway device 100. As an alternative, the system may be so configured that the disk device 104 is coupled to the gateway device 100 as a storage device.

Further, according to this embodiment, the log retrieval function 153 is operated by the gateway device 100. As long as the system is so configured that the uncompressed log file 160 and the compressed log file 161 are accessible from the log retrieval function 153, however, the log retrieval function 153 may alternatively be implemented by a device other than the gateway device 100.

The second embodiment represents a technique to change the log acquisition mode dynamically by confirming the content of the response to the request from the client in addition to the method of recording the access log in accordance with the designation of the log acquisition mode by the manager as described in the first embodiment. The explanation that follows is concentrated mainly on the difference from the first embodiment.

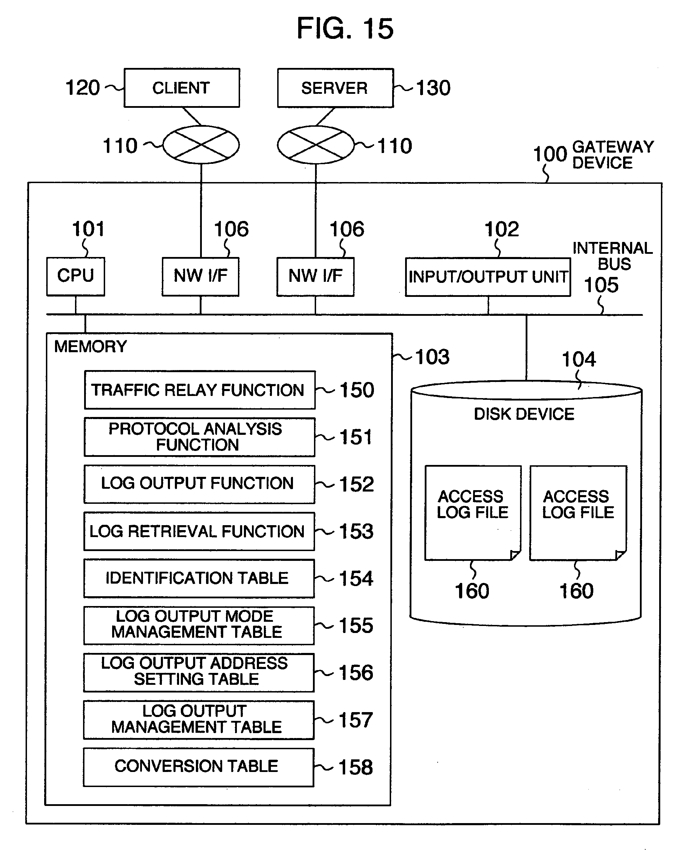

Fig. 15 shows an example of the system configuration having a conversion table 158 in addition to the example of the system configuration shown in Fig. 1. The conversion table 158 is stored in the memory 103 of the gateway device 100.

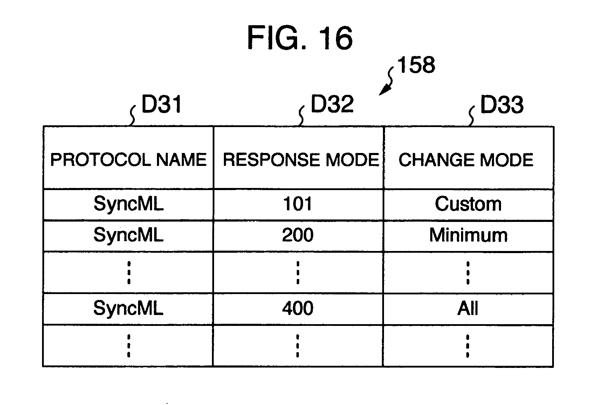

Fig. 16 shows an example of the conversion table 158 held by the gateway device 100. The protocol name column D31 stores therein the name of the protocol of the message transmitted/received between the client 120 and the server 130. The response code column D32 stores therein the response code of the particular protocol. The change mode column D33 stores therein the mode name after change of the log acquisition mode for the response code of the protocol.

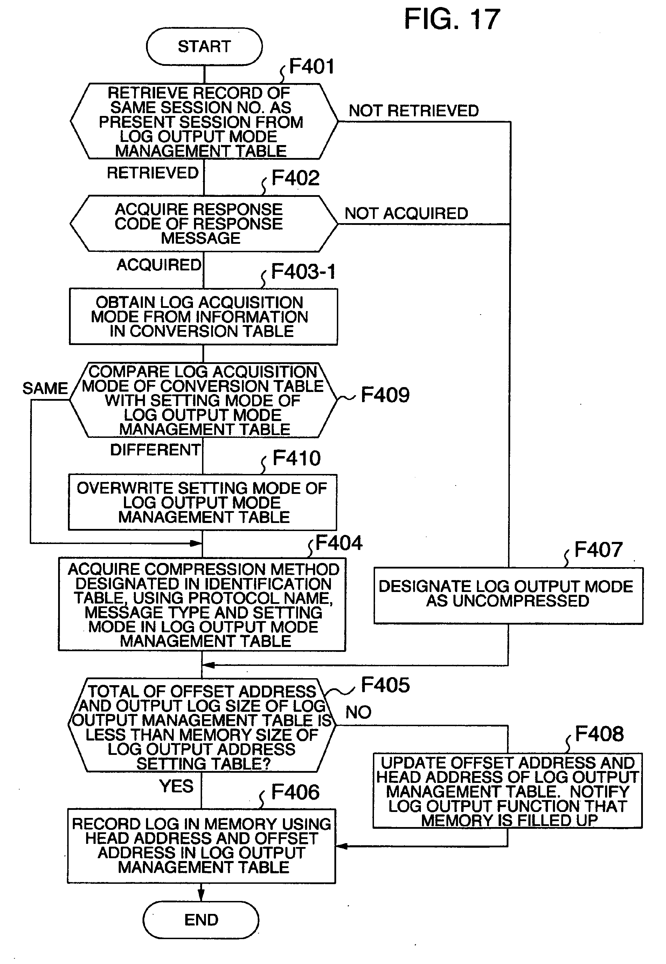

Fig. 17 is a flowchart showing the detailed step (F302 in Fig. 11) for outputting the access log when the traffic relay function 150 receives the response from the server 130.

The difference of the flowchart shown in Fig. 17 from the flowchart shown in Fig. 12 is explained below.

In the case where the retrieval in step F401 is successful, the traffic relay function 150 acquires the response code in the response message (F402).

In the case where the response code is obtained in step F402, the traffic relay function 150 acquires the setting mode designated in the setting mode column D13 and the protocol name designated in the protocol name column D12 of the record of the log output mode management table 155 (F403-1).

Next, the traffic relay function 150 acquires the contents of the protocol name column D31 and the response code column D32 of the conversion table 158 on the one hand and the mode of the change mode column D33 in which the particular protocol name and the response code are described in the same record. This mode is compared with the mode designated in the setting mode column D13 of the session record of the log output mode management table 155 (F409).

In the case where the modes compared with each other in step F409 are different from each other, the traffic relay function 150 writes the contents of the setting mode column D13 of the session record of the log output mode management table 155 over the mode of the change mode column D33 of the same record of the conversion table 158. Then, the traffic relay function 150 proceeds to step F404 (F410).

In the case where the comparison shows that the modes are the same in step F409, on the other hand, the traffic relay function 150 proceeds to step F404.

Also, in the case where the record fails to be retrieved in step F401 or the response code fails to be acquired in step F402, the traffic relay function 150 designates the setting mode of the log output as uncompressed, and proceeds to step F405 (F407).

The subsequent process is identical with the process shown in Fig. 12.

According to this embodiment, the content of the response from the server 130 is confirmed, and in accordance with the content of the response, the access log acquisition mode is dynamically changed. As a result, the access log liable to be retrieved can be recorded in uncompressed form.

According to this embodiment, the access log can be retrieved without accessing the compressed access log file, and therefore, the retrieval time can be shortened.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. In a gateway device (100) coupled both to a client (120) and a server (130) through at least a network (110), an access log management method for transmitting the request received from the client (120) to the server (130) and transmitting the response received from the server (130) to the client (120), comprising the steps of:
classifying the access log for each protocol used for access from the client (120) to the server (130);
compressing the access log of the type designated in advance as an object of compression; and
leaving the access log of the type designated in advance not to compress as uncompressed.

2. The access log management method according to Claim 1,
wherein the gateway device (100) determines the type designated as compressed and the type designated as uncompressed in accordance with the log acquisition mode designated for the protocol and the message type of the protocol.

3. The access log management method according to Claim 2,
wherein the log acquisition mode is set in accordance with the setting mode for setting the log acquisition mode for each session.

4. The access log management method according to Claim 3,
wherein the gateway device (100) changes the setting mode in accordance with the response code from the server (130).

5. The access log management method according to Claim 1,
wherein the gateway device (100) records the compressed access log in the compressed log file and the uncompressed access log in the uncompressed log file.

6. The access log management method according to Claim 5,
wherein the gateway device (100) retrieves the uncompressed log file in priority to the compressed log file in response to a retrieval request from the client (120).

7. The access log management method according to Claim 6,
wherein the gateway device (100) searches the uncompressed log file and, in the case where the retrieval fails, searches the compressed log file.

8. An access log management device (101, 103), adapted to be positioned in a gateway device (100) coupled both to a client (120) and a server (130) through at least a network (110), for transmitting the request received from the client (120) to the server (130) and for transmitting the response received from the server (130) to the client (120), comprising:
classifying module (150) for classifying the access log for each protocol used for access from the client (120) to the server (130);
compressing module (150, 152) for compressing the access log of the type designated in advance as an object of compression; and
leaving module (150) for leaving the access log of the type designated in advance not to compress as uncompressed.
